# FASCICULE DE BREVET EUROPEEN

(11) **EP 0 723 897 B1**
(45) Date de publication et mention de la délivrance du brevet: **22.03.2000**
(21) Numéro de dépôt: 96400126.7
(22) Date de dépôt: 19.01.1996
(51) Int. Cl.: B60S 1/08

(54) **Vitrage feuilleté équipé d'un détecteur**
Verbundglasscheibe mit Detektor
Laminated glazing equipped with a detector

(30) Priorité: 26.01.1995 FR 9500887
(43) Date de publication de la demande: 31.07.1996
(73) Titulaire: SAINT-GOBAIN VITRAGE, 92400 Courbevoie (FR)
(72) Inventeur: Didelot, Claude, F-60150 Thourotte (FR)
(74) Mandataire: Muller, René

(56) Documents cités:
- EP-A- 0 177 419
- EP-A- 0 512 653
- EP-A- 0 641 696
- EP-A- 0 667 265
- WO-A-94/00319

## Description

La présente invention concerne un vitrage, notamment pour véhicule de transport terrestre, maritime ou aérien, équipé d'un système de détection monté sur le vitrage lui-même, notamment un système de détection de corps étrangers tels que de l'eau à la surface extérieure du vitrage. Plus particulièrement, l'invention concerne un vitrage feuilleté pourvu d'un système de détection susceptible de fournir un signal capable de commander le fonctionnement d'un dispositif tel qu'un dispositif d'essuie-glace. L'invention concerne encore un vitrage feuilleté prêt à être équipé notamment par un tel système de détection.

Des vitrages équipés de systèmes de détection d'eau ou d'humidité ont déjà été décrits par exemple dans les publications de brevets WO 94/00319, EP-A-0 512 653, EP-A-0 626 593. Ces systèmes de détection comprennent un transducteur pour émettre au moins un signal ultrasonore se propageant dans l'épaisseur du vitrage et pour recevoir un signal réfléchi représentatif de la présence ou non de corps étrangers, le transducteur étant fixé sur la face intérieure du vitrage, c'est-à-dire sur la face du vitrage orientée vers l'habitacle du véhicule. Le signal réfléchi reçu par le transducteur est transformé en signal électrique et comparé à un seuil de référence. Le résultat de la comparaison entraîne ou non la commande du fonctionnement du moteur d' essuie-glace.

Pour assurer la fiabilité du système de détection, il est nécessaire que le signal réfléchi ne subisse pas de perturbations non contrôlables.

La demanderesse a maintenant montré qu'en disposant le système de détection sur un vitrage feuilleté, de façon connue, c'est-à-dire sur la face du vitrage orientée vers l'habitacle du véhicule comme décrit dans les documents cités précédemment, la couche intercalaire en matière plastique, généralement en polyvinylbutyral plastifié (PVB), qui est nécessairement traversée par le signal incident et par le signal réfléchi, est une source de perturbation importante pour ce signal. En particulier les variations des propriétés du PVB en fonction de la température, liées à l'épaisseur conséquente de la couche (usuellement de l'ordre de 0,76 mm) provoquent notamment des variations dans l'amortissement du signal réfléchi, qui ne peuvent être analysées et traitées en conséquence par un dispositif électronique simple, c'est-à-dire par un dispositif qui ne soit pas d'un coût exorbitant pour l'application envisagée.

L'invention propose un vitrage feuilleté comprenant au moins une feuille rigide notamment en verre et au moins une couche de matière plastique, muni d'un détecteur d'humidité notamment de type ultrasonore tel qu'un de ceux décrits dans les documents cités précédemment, l'ensemble constituant un système fiable.

Le vitrage feuilleté selon l'invention telle que définie pour les Etats contractants (BE, LU et PT) comprend au moins une feuille rigide notamment en verre et au moins une couche de matière plastique et un dispositif de détection appelé détecteur par la suite, pour détecter à l'aide d'un signal la présence d'objets ou de corps étrangers à l'extérieur du vitrage par rapport à l'habitacle du véhicule et notamment de l'eau sur la face extérieure du vitrage, ce détecteur étant monté à demeure, caractérisé en ce que le détecteur est disposé sur la face du vitrage orientée vers l'habitacle ou sur une face intérieure du vitrage, sans interposition d'une couche de matière plastique susceptible de perturber le signal, en regard du détecteur, entre lui et la face extérieure du vitrage.

Lorsque le vitrage selon l'invention comprend deux feuilles de verre et une couche intercalaire en matière plastique notamment en PVB,une réalisation de l'invention consiste à placer le détecteur sur la face de la feuille de verre orientée vers l'habitacle et à disposer dans la zone en regard du détecteur, entre lui et la face extérieure du vitrage, en remplacement de la couche intercalaire manquante en cet emplacement, une pastille en un matériau qui n'affecte pas le signal en particulier un signal ultrasonore, tout au moins de manière non contrôlable. La pastille qui se substitue à l'intercalaire dans la zone limitée en regard du détecteur peut être en un métal tel que l'aluminium, le cuivre, le plomb. Elle peut avantageusement être pourvue d'un revêtement tel qu'un revêtement émaillé ou tout autre sur sa face orientée vers la feuille de verre extérieure du vitrage.

Les dimensions de la pastille correspondent sensiblement aux dimensions du détecteur. La pastille doit se substituer à la couche intercalaire sur au moins la zone traversée par le signal de détection.

Ainsi la pastille peut être formée d'un disque de 20 à 50 mm par exemple. L'épaisseur de la pastille correspond sensiblement à l'épaisseur de l'intercalaire déduction faite le cas échéant de minces couches de colle éventuellement utilisées et qui ne perturbent pas le signal de manière non contrôlée.

Lorsque le vitrage feuilleté présente une couche intercalaire d'épaisseur relativement importante, de l'ordre de quelques millimètres par exemple, notamment dans le cas de vitrage pour avion, le détecteur peut être noyé dans cette couche intercalaire, en s'assurant à nouveau qu'il n'y a pas interposition d'une couche de matière plastique susceptible de perturber le signal, en regard du détecteur entre lui et la face extérieure du vitrage.

Dans une variante particulièrement avantageuse, le vitrage feuilleté selon l'invention comporte un trou dans sa feuille de verre dirigée vers l'habitacle, de manière à pouvoir monter à demeure directement le détecteur sur la face intérieure de la feuille de verre extérieure. Cette variante consiste donc à placer le détecteur directement sur la face 2 du vitrage lorsqu'on numérote dans l'ordre les faces de 1 à 4 des deux feuilles de verre, en partant de la face 1 qui est la face extérieure du vitrage et aussi la face extérieure de la feuille de verre extérieure, pour arriver à la face 4 qui est la face orientée vers l'habitacle de la feuille de verre intérieure. Bien entendu, dans cette variante, la couche intercalaire est omise dans la zone couverte par le détecteur. Celui-ci peut être monté à demeure sur la face 2 en étant par exemple collé sur la face 2 par un mince film de colle d'épaisseur généralement inférieure à 100 µm qui ne perturbe pas le signal ultrasonore ou encore le cas échéant avec interposition entre la face 2 et le détecteur d'une couche opaque et/ou pastille telle une couche d'émail qui ne perturbe pas le signal ultrasonore tout au moins de manière non contrôlée. En variante, le détecteur peut être maintenu contre la face 2 et éventuellement contre la couche opaque ou pastille par des moyens élastiques par exemple.

Dans une autre réalisation du vitrage selon l'invention, celui-ci adopte la structure d'un vitrage à deux couches (« bilayer »), c'est-à-dire qu'il comprend une seule feuille de verre et au moins une couche de matière plastique, généralement deux ou trois couches de matière plastique présentant respectivement des propriétés d'absorbeur d'énergie et des propriétés de surface telles que résistance à la rayure et à l'abrasion. Dans cette réalisation, l'invention envisage de placer le détecteur directement sur la face intérieure de la feuille de verre en un emplacement où la ou les couches de matière plastique sont absentes ou omises. La ou les couches de matière plastique pouvant être utilisée(s) dans un vitrage « bilayer » sont par exemple des couches de polyuréthane comme celles décrites notamment dans les publications de brevets FR-A-2 480 669, FR-A-2 546 810, FR-A-2 398 606, EP-A-0 132 198, EP-A-0 389 354, EP-A-0 190 517 ou encore JP-A-86 177 241 et JP-A-86 281 118 desquelles l'homme de métier pourra tirer l'enseignement nécessaire.

Lorsque le détecteur équipant le vitrage est un détecteur de présence de corps étrangers tels que de l'eau sur la face extérieure du vitrage, le détecteur est disposé de préférence en regard de la zone balayée par le ou les essuie-glace.

Le détecteur peut en outre être avantageusement disposé sous un support de rétroviseur.

Le détecteur pouvant être utilisé dans le cadre de l'invention est de préférence un détecteur de signal ultrasonore tel qu'un de ceux décrits par exemple dans les publications de brevets déjà cités WO-A-94/00 319, EP-A-0 512 653, EP-A-0 626 593 desquelles l'homme de métier pourra tirer l'enseignement nécessaire.

Sa disposition sur le vitrage selon l'invention lui assure une très bonne fiabilité et cela, dans des conditions de températures très variables. Le détecteur peut être utilisé pour commander le fonctionnement d'essuie-glace ou encore d'autres dispositifs tels qu'un réseau chauffant anti-givre.

L'invention concerne aussi un vitrage feuilleté bombé comprenant une feuille de verre extérieure et une feuille de verre intérieure, prêt à être équipé notamment par un détecteur, et dont la feuille de verre intérieure est pourvue d'au moins un trou réalisé avant le traitement thermique de bombage des feuilles de verre.

Afin de renforcer les caractéristiques mécaniques du vitrage, le pourtour du trou de la feuille de verre intérieure est avantageusement soumis à des contraintes en compression. Ces contraintes qui peuvent s'étendre sur quelque millimètres par exemple peuvent être obtenues par une opération de trempe thermique localisée autour du trou. Les contraintes peuvent être de l'ordre de 5 à 40 mégapascals et de préférence de 20 à 30 mégapascals.

D'autres avantages et caractéristiques de l'invention apparaîtront dans la description suivante d'exemples de réalisation de vitrage selon l'invention, faite en référence aux figures.

La figure 1 représente shématiquement un vitrage feuilleté, ici un pare-brise de véhicule, équipé d'un détecteur capable de commander le fonctionnement des essuie-glace.

La figure 2 est une section partielle du vitrage selon la figure 1 à l'emplacement du détecteur.

La figure 3 représente shématiquement une variante d'un vitrage selon l'invention.

La figure 4 représente shématiquement un vitrage à deux couches selon l'invention.

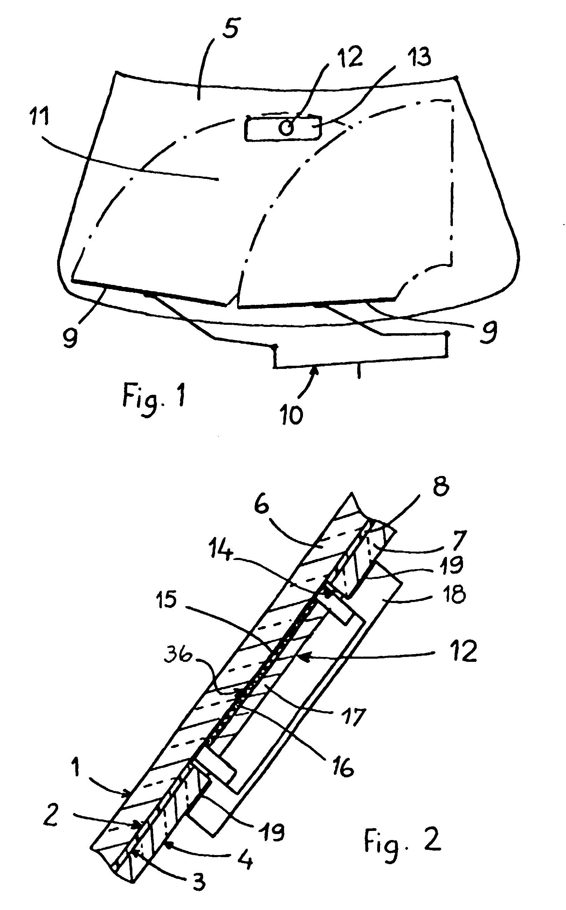

Le vitrage feuilleté 5 représenté sur les figures 1 et 2 est formé de deux feuilles de verre, une feuille de verre extérieure 6 et une feuille de verre intérieure 7, qui est destinée à être orientée vers l'habitacle du véhicule. Les deux feuilles de verre sont assemblées par une couche intercalaire 8 en PVB. Les faces des feuilles de verre sont numérotées de 1 à 4, la face 1 étant la face orientée vers l'extérieur de la feuille de verre extérieure 6, la face 2 étant la face intérieure de cette même feuille de verre 6, la face 3 étant la face intérieure au vitrage de la feuille de verre intérieure 7 et la face 4 étant la face orientée vers l'habitacle de cette feuille de verre intérieure 7. Le vitrage est associé à un dispositif de nettoyage comprenant ici deux essuie-glace 9 et leur mécanisme 10 partiellement représenté. Dans la zone 11 balayée par les essuie-glace 9, le vitrage est pourvu d'un détecteur d'humidité 12, relié à un circuit électronique, non représenté, commandant ou non le déclenchement du fonctionnement des essuie-glace 9. Le détecteur 12 est avantageusement disposé dans la partie supérieure du vitrage et à l'emplacement du support du rétroviseur 13.

Le détecteur 12 comprend un transducteur ultrasonore pouvant émettre un signal ultrasonore incident se propageant vers la surface extérieure du pare-brise (face 1) et pouvant réceptionner le signal qui se réfléchit sur cette surface extérieure.

Le détecteur 12 est fixé directement sur la face 2 du vitrage comme représenté sur la figure 2. A cette fin, la feuille de verre intérieure 7 présente un trou 14 suffisamment large, par exemple de 30 mm de diamètre, en regard du détecteur, par lequel peut passer le détecteur lors de son montage par collage à l'aide d'un mince film de colle 15.

La couche intercalaire 8 en polyvinylbutyral a auparavant été retirée à l'emplacement du montage du détecteur, comme il sera décrit par la suite. La disposition du détecteur directement sur la face 2 du vitrage évite ainsi tout problème de perturbations du signal ultrasonore pouvant être liées à la présence d'une couche intercalaire dont les propriétés peuvent varier en fonction de la température du vitrage, entraînant ainsi une variation non contrôlée de l'amortissement du signal ultrasonore.

Le détecteur 12 ou transducteur proprement dit comprend une pastille 16 en céramique piézo-électrique fixée à l'aide du mince film de colle 15 sur la face 2 et un ensemble de composants électroniques 17 pouvant être relié à une alimentation électrique non représentée. Sur le pourtour du trou 14 il est possible de fixer un support de rétroviseur 18 à l'aide d'une couche de colle 19 sur la face 4 du vitrage.

Pour fabriquer le vitrage décrit ci-dessus, on opère de la manière suivante :

On perce la feuille de verre (verre usuel obtenu par le procédé de flottage) destinée à constituer la feuille de verre intérieure 7, présentant une épaisseur de 2,2 mm par exemple. Le trou de perçage placé à l'emplacement désiré peut avoir un diamètre de 30 mm par exemple. La feuille de verre trouée est associée à une autre feuille de verre présentant une épaisseur de 2,5 mm par exemple destinée à former la feuille de verre extérieure du vitrage, et l'ensemble est soumis au traitement de bombage, notamment sur cadre, par gravité, bien connu de l'homme de métier. Au cours du refroidissement, on souffle un air comprimé autour du trou de la feuille intérieure disposée normalement au-dessus de l'empilage constitué par les deux feuilles de verre. Cette opération utilisant un soufflage d'air, est assimilable à une trempe thermique localisée, et a pour but de créer des contraintes en compression à la périphérie du trou afin d'augmenter les caractéristiques mécaniques de la feuille de verre. Les deux feuilles de verre bombées sont assemblées après incorporation d'une feuille intercalaire notamment en PVB de 0,76 mm d'épaisseur par les procédés classiques d'assemblage utilisant la température et la pression.

Le vitrage feuilleté obtenu qui est un objet de l'invention, peut être utilisé notamment pour le montage du détecteur ultrasonore. A cette fin, on retire la rondelle de PVB en regard du trou de la feuille de verre intérieur et on colle en cet emplacement, sur la face 2 du vitrage, le détecteur ultrasonore, à l'aide d'un mince film de colle, d'une épaisseur inférieure à 100 µm. Sur le pourtour du trou, sur la face 4 du vitrage, il est possible de fixer un support de rétroviseur. Dans ce cas il peut être prévu de monter séparément le détecteur et le support du rétroviseur ou en variante de monter l'ensemble en une fois par collage. Le trou permet un bon centrage.

Pour maquiller ou masquer le détecteur à la vue de l'extérieur du pare-brise, on peut avantageusement prévoir, au moins à l'emplacement prévu du détecteur, le dépôt d'une couche opaque 36 telle une couche d'émail en face 2 au moment de la fabrication du vitrage. Ce dépôt peut s'opérer de manière connue par dépôt d'une composition d'émail, notamment par sérigraphie, sur la face 2 de la feuille de verre extérieure, suivi d'une cuisson simultanée à l'opération de bombage.

Ce dépôt peut être prévu au moins à l'emplacement du détecteur en une zone isolée ou dans la continuité du cadre émaillé qui est généralement prévu pour les vitrages destinés à être collés si celui-ci s'opère sur la face 2.

La réalisation d'un tel dépôt assure en outre une protection de l'adhésif utilisé pour le collage du détecteur, notamment vis-à-vis des U.V.

Il permet encore de masquer des défauts éventuels de collage du PVB à proximité du trou du vitrage. La couche d'émail peut aussi être remplacée par une autre couche opaque (primaire noir, etc...).

Le pare-brise ainsi fabriqué peut être monté sur un véhicule de manière connu par collage dans la baie de carrosserie. Sur le véhicule, il suffit ensuite de connecter le détecteur à une alimentation électrique et au dispositif actionnant les essuie-glace.

Le vitrage décrit ci-dessus a été testé dans des conditions de températures très variables. L'ensemble s'est révélé très fiable.

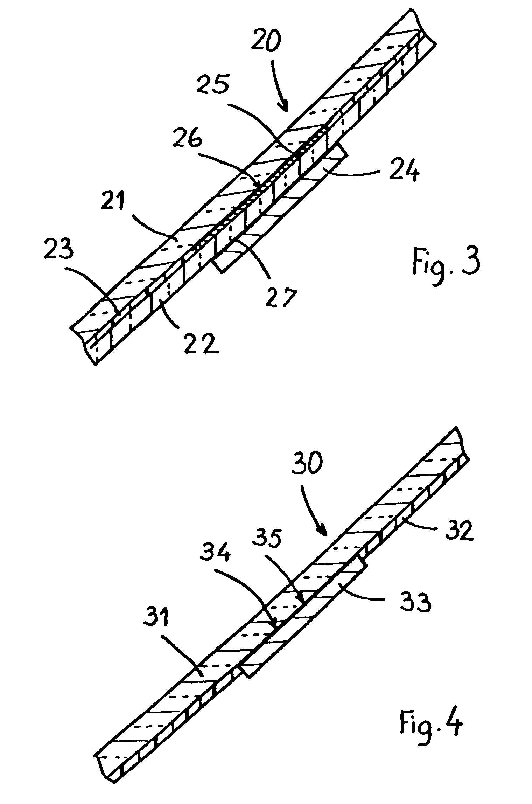

Sur la figure 3 est représentée une variante du vitrage feuilleté selon l'invention. Dans cette variante le vitrage feuilleté 20 comprend deux feuilles de verre 21, 22 et une couche intercalaire 23 en PVB. Il est muni d'un détecteur ultrasonore 24 collé sur la face 4 du vitrage à l'aide d'un mince film de colle 27. En regard du détecteur 24, la couche intercalaire 23 en matière plastique a été retirée et remplacée par une rondelle métallique 25 d'environ 30 mm de diamètre, c'est-à-dire sensiblement les dimensions du détecteur, et de même épaisseur que l'intercalaire soit 0,76 mm.

Le remplacement de la couche de PVB par la rondelle métallique 25 permet de s'affranchir des problèmes d'amortissement variable du signal ultrasonore en fonction des variations des propriétés du PVB.

Pour masquer la rondelle métallique on peut comme dans le cas de la variante précédente disposer en face 2 sur la feuille de verre en regard de la rondelle métallique une couche opaque 26 telle une couche émaillée ou une autre couche (primaire noir, etc...).

Pour fabriquer le vitrage décrit ci-dessus, avant l'assemblage des deux feuilles de verre avec l'intercalaire, on remplace à l'emplacement désiré une rondelle d'intercalaire par la rondelle métallique. L'assemblage du vitrage se réalise ensuite de façon traditionnelle. Le détecteur ultrasonore est ensuite collé sur la face 4 du vitrage, en regard de la rondelle métallique.

Comme représente sur la figure 4, le vitrage selon l'invention peut adopter la structure d'un vitrage 30 à deux couches, à savoir une feuille de verre 31 et une feuille de matière plastique 32 à une ou plusieurs couches par exemple en polyuréthane, comme cité précédemment.

Avec cette structure à deux couches, le vitrage selon l'invention est muni d'un détecteur 33 ultrasonore collé directement sur la face intérieure 2 de la feuille de verre à l'aide d'un mince film de colle 34. A cette fin, la feuille de matière plastique a été retirée par une découpe de la feuille dans la zone 35 correspondante à celle occupée par le détecteur.

Les demandes EP-A-0 641 696 et EP-A-0 667 265 décrivent un vitrage feuilleté notamment pour véhicule de transport, comprenant par exemple au moins une feuille de verre et au moins une couche de matière plastique et un détecteur monté à demeure sur le vitrage pour détecter à l'aide d'un signal la présence d'eau sur la surface extérieure du vitrage. La formation d'un trou dans une feuille de verre constituant le vitrage est décrite ; le pourtour de ce trou ne présente cependant pas de contraintes en compression.

Ces deux documents appartiennent à l'état de la technique selon l'Article 54(3) et (4) CBE et ne sont opposables à la présente demande qu'au titre de la nouveauté pour les Etats contractants DE, ES, FR, GB, IT, NL et SE. Par conséquent, pour ces sept États contractants, le vitrage et son procédé de fabrication sont définis dans un second jeu de revendications.

## Revendications (Revendications pour l'(les) Etat(s) contractant(s) suivant(s): DE, ES, FR, GB, IT, NL, SE)

1. Vitrage feuilleté notamment pour véhicule de transport, comprenant au moins une feuille de verre extérieure (6), une feuille de verre intérieure (7), au moins une couche intercalaire de matière plastique (8) et un détecteur (12) monté à demeure sur le vitrage pour détecter à l'aide d'un signal la présence d'objets ou de corps étranger à l'extérieur du vitrage, notamment de l'eau sur la surface extérieure du vitrage, le détecteur étant disposé sur la face intérieure (2) de la feuille de verre extérieure (6) sans interposition d'une couche de matière plastique susceptible de perturber le signal, en regard du détecteur, entre lui et la face extérieure (1) du vitrage, la feuille de verre intérieure (7) comportant, pour le passage du détecteur (12), un trou (14) dont le pourtour présente des contraintes en compression.

2. Vitrage feuilleté selon la revendication 1, **caractérisé en ce que** le détecteur (12) est un détecteur ultrasonore.

3. Vitrage feuilleté selon une des revendications 1 ou 2, **caractérisé en ce que** le détecteur (12) est utilisé pour commander le fonctionnement d'au moins un essuie-glace (9).

4. Vitrage feuilleté selon la revendication 3, **caractérisé en ce que** le détecteur (12) est disposé en regard de la zone balayée par l'essuie-glace (9).

5. Vitrage feuilleté selon une des revendications 1 à 4, **caractérisé en ce que** le détecteur (12) est collé directement sur la feuille de verre intérieure (7).

6. Vitrage feuilleté selon une des revendications 1 à 5, **caractérisé en ce** la couche intercalaire (8) est omise en regard du trou (14) de la feuille de verre intérieure (7).

7. Vitrage feuilleté selon l'une des revendications 1 à 5, **caractérisé en ce que** le détecteur (12) est noyé dans une couche intercalaire (8).

8. Vitrage feuilleté selon une des revendications 1 à 7, **caractérisé en ce qu'**une couche opaque (36) notamment à base d'un émail est disposée sur la face 2 au moins à l'emplacement du détecteur (12).

9. Vitrage feuilleté selon l'une des revendications 1 à 8, **caractérisé** **en ce qu'**il est bombé.

10. Procédé pour la fabrication du vitrage selon l'une des revendications 1 à 9, **caractérisé en ce qu'**:
• on perce la feuille de verre destinée à constituer la feuille de verre intérieure (7), à l'emplacement prévu pour le montage ultérieur du détecteur (12) ;
• on associe cette feuille intérieure (7) à une seconde feuille de verre destinée à constituer la feuille de verre extérieure (6) ;
• on soumet l'ensemble à un procédé de bombage ;
• on assemble les deux feuilles de verre (6, 7) après interposition d'une feuille intercalaire (8) ;
• on retire la rondelle de PVB en regard du trou (14) de la feuille de verre intérieure (7) ;
• on monte à demeure le détecteur (12) sur la face intérieure 2 de la feuille de verre extérieure (6).

## Revendications (Revendications pour l'(les) Etat(s) contractant(s) suivant(s): BE, LU, PT)

1. Vitrage feuilleté notamment pour véhicule de transport, comprenant au moins une feuille rigide notamment une feuille de verre (6, 7 ; 21, 22 ; 31) et au moins une couche de matière plastique (8 ; 23 ; 32) et un détecteur (12 ; 24 ; 33) monté à demeure sur le vitrage pour détecter à l'aide d'un signal la présence d'objets ou de corps étranger à l'extérieur du vitrage, notamment de l'eau sur la surface extérieure du vitrage, **caractérisé en ce que** le détecteur est disposé sur la face du vitrage orientée vers l'habitacle du véhicule ou sur une face intérieure (2) du vitrage, sans interposition d'une couche de matière plastique susceptible de perturber le signal, en regard du détecteur, entre lui et la face extérieure (1) du vitrage.

2. Vitrage selon la revendication 1, **caractérisé en ce que** le détecteur est un détecteur ultrasonore.

3. Vitrage selon une des revendications 1 ou 2, **caractérisé en ce que** le détecteur est utilisé pour commander le fonctionnement d'au moins un essuie-glace.

4. Vitrage selon la revendication 3, **caractérisé en ce qu'**il est disposé en regard de la zone balayée par l'essuie-glace (9).

5. Vitrage selon une des revendications 1 à 4, **caractérisé en ce qu'**il comprend deux feuilles de verre (21 ; 22) et une couche intercalaire (23) en matière plastique, un détecteur (24) disposé sur la face (4) de la feuille de verre destinée à être orientée vers l'habitacle du véhicule et, en regard du détecteur, entre lui et la face extérieure (1) du vitrage, en remplacement de la couche manquante en cet emplacement, une pastille (25) en un matériau qui n'affecte pas le signal du détecteur.

6. Vitrage selon une des revendications 1 à 4, **caractérisé en ce qu'**il comprend deux feuilles de verre et une couche intercalaire **et en ce que** le détecteur est placé directement sur la face intérieure (2) de la feuille de verre extérieure (6), la feuille de verre intérieure (7) comportant un trou (14) pour le passage du détecteur (12).

7. Vitrage selon la revendication 6, **caractérisé en ce que** le détecteur est collé directement sur la feuille de verre intérieure.

8. Vitrage selon une des revendications 1 à 4, **caractérisé en ce qu'**il comprend une feuille de verre (31) et au moins une couche de matière plastique (32), le détecteur (33) étant placé directement sur la face intérieure de la feuille de verre, la couche de matière plastique étant manquante en l'emplacement du détecteur.

9. Procédé pour la fabrication du vitrage selon l'une quelconque des revendications précédentes, **caractérisé en ce qu':**
• on perce la feuille de verre destinée à constituer la feuille de verre intérieure, à l'emplacement prévu pour le montage ultérieur du détecteur ;
• on associe cette feuille intérieure à une seconde feuille de verre destinée à constituer la feuille de verre extérieure ;
• on soumet l'ensemble à un procédé de bombage ;
• on assemble les deux feuilles de verre après interposition d'une feuille intercalaire ;
• on retire la rondelle de PVB en regard du trou de la feuille de verre intérieure ;
• on monte à demeure le détecteur sur la face intérieure de la feuille de verre extérieure.

10. Vitrage feuilleté bombé comprenant une feuille de verre extérieure, une feuille de verre intérieure et au moins une couche intercalaire, **caractérisé en ce que** la feuille de verre intérieure est pourvue d'au moins un trou réalisé avant le traitement thermique de bombage des feuilles de verre de manière à permettre le montage d'un détecteur selon une des revendications 1 à 8.

11. Vitrage feuilleté bombé selon la revendication 10, **caractérisé en ce que** le pourtour du trou présente des contraintes en compression.

12. Vitrage feuilleté bombé selon une des revendications 10 ou 11, **caractérisé en ce que** la couche intercalaire est omise en regard du trou de la feuille de verre intérieure.

13. Vitrage feuilleté selon une des revendications 1 à 4, **caractérisé en ce que** le détecteur est noyé dans une couche intercalaire.

14. Vitrage feuilleté selon la revendication 6, **caractérisé en ce** **qu'**une couche opaque notamment à base d'un émail est disposée sur la face 2 au moins à l'emplacement du détecteur.

## Patentansprüche (Patentansprüche für folgende(n) Vertragsstaat(en): DE, ES, FR, GB, IT, NL, SE)

1. Verbundverglasung, insbesondere für Transportfahrzeuge, welche mindestens eine äußere Glasscheibe (6), eine innere Glasscheibe (7), mindestens eine Zwischenschicht (8) aus Kunststoff und einen Detektor (12) umfaßt, der dauerhaft an der Verglasung angebracht ist, um mittels eines Signals das Vorhandensein von fremden Objekten oder Fremdkörpern außen auf der Verglasung, speziell von Wasser auf der Außenseite der Verglasung, nachzuweisen, wobei der Detektor auf der Innenseite (2) der äußeren Glasscheibe (6) ohne die Zwischenlage einer Kunststoffschicht, die in der Lage wäre, das Signal zu stören, gegenüber dem Detektor zwischen ihm und der Außenseite (1) der Verglasung angeordnet ist und die innere Glasscheibe (7) für den Einbau des Detektors (12) ein Loch (14) enthält, dessen Umfang Druckspannungen aufweist.

2. Verbundverglasung nach Anspruch 1, **dadurch gekennzeichnet, daß** der Detektor (12) mit Ultraschall arbeitet.

3. Verbundverglasung nach Anspruch 1 oder 2, **dadurch gekennzeichnet, daß** der Detektor (12) zur Steuerung der Tätigkeit mindestens eines Scheibenwischers (9) verwendet wird.

4. Verbundverglasung nach Anspruch 3, **dadurch gekennzeichnet, daß** der Detektor (12) gegenüber dem Bereich angeordnet ist, der vom Scheibenwischer (9) überstrichen wird.

5. Verbundverglasung nach einem der Ansprüche 1 bis 4, **dadurch gekennzeichnet, daß** der Detektor (12) direkt auf die innere Glasscheibe (7) geklebt ist.

6. Verbundverglasung nach einem der Ansprüche 1 bis 5, **dadurch gekennzeichnet, daß** die Zwischenschicht (8) gegenüber dem Loch (14) der inneren Glasscheibe (7) nicht vorhanden ist.

7. Verbundverglasung nach einem der Ansprüche 1 bis 5, **dadurch gekennzeichnet, daß** der Detektor (12) in eine Zwischenschicht (8) eingebettet ist.

8. Verbundverglasung nach einem der Ansprüche 1 bis 7, **dadurch gekennzeichnet, daß** eine opake Schicht (36), insbesondere auf Basis eines Emails, wenigstens an der Stelle des Detektors (12) auf Seite 2 angeordnet ist.

9. Verbundverglasung nach einem der Ansprüche 1 bis 8, **dadurch gekennzeichnet, daß** sie gebogen ist.

10. Verfahren zur Herstellung der Verglasung nach einem der Ansprüche 1 bis 9, **dadurch gekennzeichnet, daß**
• die Glasscheibe, welche vorgesehen ist, die innere Glasscheibe (7) zu bilden, an der Stelle, an welcher später der Detektor (12) eingebaut werden soll, durchbohrt wird,
• diese innere Glasscheibe (7) mit einer zweiten Glasscheibe, welche vorgesehen ist, die äußere Glasscheibe (6) zu bilden, verbunden wird,
• der Aufbau einem Biegevorgang unterzogen wird,
• die beiden Glasscheiben (6, 7) nach Einfügen einer Zwischenfolie (8) miteinander verbunden werden,
• die Scheibe aus PVB gegenüber dem Loch (14) der inneren Glasscheibe (7) entfernt wird und
• der Detektor (12) auf der Innenseite 2 der äußeren Glasscheibe (6) dauerhaft angebracht wird.

## Patentansprüche (Patentansprüche für folgende(n) Vertragsstaat(en): BE, LU, PT)

1. Verbundverglasung, insbesondere für Transportfahrzeuge, welche mindestens eine starre Scheibe, speziell eine Glasscheibe (6, 7; 21, 22; 31), mindestens eine Kunststoffschicht (8; 23; 32) und einen Detektor (12; 24; 33) umfaßt, der dauerhaft an der Verglasung angebracht ist, um mittels eines Signals das Vorhandensein von fremden Objekten oder Fremdkörpern außen auf der Verglasung, insbesondere von Wasser auf der Außenseite der Verglasung, nachzuweisen, **dadurch gekennzeichnet, daß** der Detektor auf der zur Fahrgastzelle zeigenden Seite der Verglasung oder auf einer Innenseite (2) der Verglasung ohne die Zwischenlage einer Kunststoffschicht, die in der Lage wäre, das Signal zu stören, gegenüber dem Detektor zwischen ihm und der Außenseite (1) der Verglasung angeordnet ist.

2. Verglasung nach Anspruch 1, **dadurch gekennzeichnet, daß** der Detektor mit Ultraschall arbeitet.

3. Verglasung nach Anspruch 1 oder 2, **dadurch gekennzeichnet, daß** der Detektor zur Steuerung der Tätigkeit mindestens eines Scheibenwischers verwendet wird.

4. Verglasung nach Anspruch 3, **dadurch gekennzeichnet, daß** er gegenüber dem Bereich angeordnet ist, der vom Scheibenwischer (9) überstrichen wird.

5. Verglasung nach einem der Ansprüche 1 bis 4, **dadurch gekennzeichnet, daß** sie zwei Glasscheiben (21; 22), eine Zwischenschicht (23) aus Kunststoff, einen Detektor (24), welcher auf der Seite (4) der Glasscheibe angeordnet ist, die vorgesehen ist, zur Fahrgastzelle zu zeigen, und gegenüber dem Detektor zwischen ihm und der Außenseite (1) der Verglasung anstatt der Schicht, die an dieser Stelle fehlt, eine Scheibe (25) aus einem Material, welches das Detektorsignal nicht beeinflußt, umfaßt.

6. Verglasung nach einem der Ansprüche 1 bis 4, **dadurch gekennzeichnet, daß** sie zwei Glasscheiben und eine Zwischenschicht umfaßt, und daß der Detektor direkt auf der Innenseite (2) der äußeren Glasscheibe (6) angeordnet ist, wobei die innere Glasscheibe (7) für den Einbau des Detektors (12) ein Loch (14) enthält.

7. Verglasung nach Anspruch 6, **dadurch gekennzeichnet, daß** der Detektor direkt auf die innere Glasscheibe geklebt ist.

8. Verglasung nach einem der Ansprüche 1 bis 4, **dadurch gekennzeichnet, daß** sie eine Glasscheibe (31) und mindestens eine Kunststoffschicht (32) umfaßt, wobei der Detektor (33) direkt auf der Innenseite der Glasscheibe angeordnet und die Kunststoffschicht an der Stelle des Detektors nicht vorhanden ist.

9. Verfahren zur Herstellung der Verglasung nach einem der vorhergehenden Ansprüche, **dadurch gekennzeichnet, daß**
• die Glasscheibe, welche vorgesehen ist, die innere Glasscheibe zu bilden, an der Stelle, an welcher später der Detektor eingebaut werden soll, durchbohrt wird,
• diese innere Glasscheibe mit einer zweiten Glasscheibe, welche vorgesehen ist, die äußere Glasscheibe zu bilden, verbunden wird,
• der Aufbau einem Biegevorgang unterzogen wird,
• die beiden Glasscheiben nach Einfügen einer Zwischenfolie miteinander verbunden werden,
• die Scheibe aus PVB gegenüber dem Loch der inneren Glasscheibe entfernt wird und
• der Detektor auf der Innenseite der äußeren Glasscheibe dauerhaft angebracht wird.

10. Gebogene Verbundverglasung, die eine äußere Glasscheibe, eine innere Glasscheibe und mindestens eine Zwischenschicht umfaßt, **dadurch gekennzeichnet, daß** die innere Glasscheibe mit mindestens einem Loch versehen ist, das vor der Wärmebehandlung zum Biegen der Glasscheiben derart hergestellt worden ist, daß es den Einbau eines Detektors nach einem der Ansprüche 1 bis 8 erlaubt.

11. Gebogene Verbundverglasung nach Anspruch 10, **dadurch gekennzeichnet, daß** der Umfang des Lochs Druckspannungen aufweist.

12. Gebogene Verbundverglasung nach Anspruch 10 oder 11, **dadurch gekennzeichnet, daß** die Zwischenschicht gegenüber dem Loch der inneren Glasscheibe fehlt.

13. Verbundverglasung nach einem der Ansprüche 1 bis 4, **dadurch gekennzeichnet, daß** der Detektor in eine Zwischenschicht eingebettet ist.

14. Verbundverglasung nach Anspruch 6, **dadurch gekennzeichnet, daß** eine opake Schicht, insbesondere auf Basis eines Emails, wenigstens an der Stelle des Detektors auf Seite 2 angeordnet ist.

## Claims (Claims for the following Contracting State(s): DE, ES FR, GB, IT, NL, SE)

1. Laminated glazing, more particularly for transport vehicles, comprising at least one outer glass sheet (6), an inner glass sheet (7), at least one plastic interlayer (8) and a detector (12) permanently fitted to the glazing for detecting, with the aid of a signal, the presence of objects or foreign bodies outside the glazing, particularly water on the outer surface of the glazing, the detector being located on the inner face (2) of the outer glass sheet (6) without the interposing of a plastics material layer liable to disturb the signal, facing the detector, between the latter and the outer face (1) of the glazing, the inner glass sheet (7) having, for the passage of the detector (12), a hole (14), whose periphery has compressive stresses.

2. Laminated glazing according to claim 1, characterized in that the detector (12) is an ultrasonic detector.

3. Laminated glazing according to one of the claims 1 or 2, characterized in that the detector (12) is used for controlling the operation of at least one windscreen wiper (9).

4. Laminated glazing according to claim 3, characterized in that the detector (12) is positioned facing the area swept by the windscreen wiper (9).

5. Laminated glazing according to one of the claims 1 to 4, characterized in that the detector (12) is bonded directly to the inner glass sheet (7).

6. Laminated glazing according to one of the claims 1 to 5, characterized in that the interlayer (8) is omitted facing the hole (14) in the inner glass sheet (7).

7. Laminated glazing according to one of the claims 1 to 5, characterized in that the detector (12) is embedded in an interlayer (8).

8. Laminated glazing according to one of the claims 1 to 7, characterized in that an opaque layer (36), particularly based on an enamel, is placed on face (2), at least at the location of the detector (12).

9. Laminated glazing according to one of the claims 1 to 8, characterized in that it is bent.

10. Process for the production of the glazing according to one of the claims 1 to 9, characterized in that:
the glass sheet for forming the inner glass sheet (7) is perforated at the location intended for the subsequent fitting of the detector (12),
said inner sheet (7) is combined with a second glass sheet for forming the outer glass sheet (6),
the assembly undergoes a bending process,
The two glass sheets (6, 7) are assembled, following the interposing of an interlayer (8),
the PVB washer facing the hole (14) in the inner glass sheet (7) is removed, the detector (12) is permanently fitted to inner face (2) of the outer glass sheet (6).

## Claims (Claims for the following Contracting State(s): BE, LU, PT)

1. Laminated glazing, more particularly for a transport vehicle, comprising at least one rigid sheet, particularly a glass sheet (6, 7; 21, 22; 31) and at least one plastic layer (8; 23; 32) and a detector (12; 24; 33) permanently fitted to the glazing for detecting, with the aid of a signal, the presence of objects or foreign bodies outside the glazing, particularly water on the outer surface of the glazing, characterized in that the detector is placed on the face of the glazing oriented towards the interior of the vehicle and on an inner face (2) of the glazing, without interposing a plastic layer liable to disturb the signal, facing the detector, between the latter and the outer face (1) of the glazing.

2. Glazing according to claim 1, characterized in that the detector is an ultrasonic detector.

3. Glazing according to one of the claims 1 or 2, characterized in that the detector is used for controlling the operation of at least one windscreen wiper.

4. Glazing according to claim 3, characterized in that it is positioned facing the area swept by the windscreen wiper (9).

5. Glazing according to one of the claims 1 to 4, characterized in that it comprises two glass sheets (21; 22) and a plastic interlayer (23), a detector (24) located on the face (4) of the glass sheet to be oriented towards the interior of the vehicle and, facing the detector, between the latter and the outer face (1) of the glazing, replacing the missing layer at this location, a pellet (25) of a material not affecting the signal of the detector.

6. Glazing according to one of the claims 1 to 4, characterized in that it comprises two glass sheets and an interlayer and in that the detector is placed directly on the inner face (2) of the outer glass sheet (6), the inner glass sheet (7) having a hole (14) for the passage of the detector (12).

7. Glazing according to claim 6, characterized in that the detector is bonded directly to the inner glass sheet.

8. Glazing according to one of the claims 1 to 4, characterized in that it comprises a glass sheet (31) and at least one plastic layer (32), the detector (33) being placed directly on the inner face of the glass sheet, the plastic layer being missing at the location of the detector.

9. Process for the production of the glazing according to any one of the preceding claims, characterized in that
the glass sheet which is to form the inner glass sheet is perforated at the location provided for the subsequent fitting of the detector,
with said inner sheet is combined a second glass sheet intended to form the outer glass sheet,
the assembly undergoes a bending process,
the two glass sheets are assembled, following the interposing of an interlayer,
the PVB washer facing the hole in the inner glass sheet is removed,
the detector is permanently fitted to the inner face of the outer glass sheet.

10. Bent laminated glazing incorporating an outer glass sheet, an inner glass sheet and at least one interlayer, characterized in that the inner glass sheet has at least one hole formed prior to the bending heat treatment of the glass sheets so as to permit the fitting of a detector according to one of the claims 1 to 8.

11. Bent laminated glazing according to claim 10, characterized in that the periphery of the hole has compressive stresses.

12. Bent laminated glazing according to one of the claims 10 or 11, characterized in that the interlayer is omitted facing the hole in the inner glass sheet.

13. Laminated glazing according to one of the claims 1 to 4, characterized in that the detector is embedded in an interlayer.

14. Laminated glazing according to claim 6, characterized in that an opaque layer, particularly based on an enamel, is placed on face (2), at least at the location of the detector.
